# EUROPÄISCHE PATENTSCHRIFT

(11) **EP 2 344 356 B1**
(45) Veröffentlichungstag und Bekanntmachung des Hinweises auf die Patenterteilung: **06.03.2013**
(21) Anmeldenummer: 09783295.0
(22) Anmeldetag: 22.09.2009
(51) Int. Cl.: B60K 35/00, G06F 3/048

(54) **VERFAHREN UND VORRICHTUNG ZUM ANZEIGEN VON INFORMATIONEN, INSBESONDERE IN EINEM FAHRZEUG**
METHOD AND DEVICE FOR DISPLAYING INFORMATION, IN PARTICULAR IN A VEHICLE
PROCÉDÉ ET DISPOSITIF D'AFFICHAGE D'INFORMATIONS, EN PARTICULIER DANS UN VÉHICULE

(30) Priorität: 02.10.2008 DE 102008050365
(43) Veröffentlichungstag der Anmeldung: 20.07.2011
(73) Patentinhaber: Volkswagen Aktiengesellschaft, 38440 Wolfsburg (DE)
(72) Erfinder: KUHN, Mathias, 14129 Berlin (DE); DEHMANN, Rainer, 10961 Berlin (DE); HAUSCHILD, Frank, 10587 Berlin (DE)
(74) Vertreter: Reitstötter - Kinzebach
(86) Internationale Anmeldenummer: PCT/EP2009/062280
(87) Internationale Veröffentlichungsnummer: WO 2010/037671

(56) Entgegenhaltungen:
- EP-A- 1 932 727
- WO-A-01/46790
- WO-A-2007/094894
- US-A- 5 736 974
- US-A1- 2005 091 609
- US-A1- 2007 261 006

## Beschreibung

Die vorliegende Erfindung betrifft ein Verfahren zum Anzeigen von Informationen, bei dem eine Liste mit mehreren graphischen Objekten mittels eines Displays graphisch dargestellt wird, wobei jedem dargestellten graphischen Objekt ein Anzeigebereich des Displays zugeordnet ist und wobei die Objekte zum Erzeugen einer Funktion auswählbar sind, wobei vor der Auswahl eines der Objekte im Anzeigebereich zumindest eines graphischen Objekts eine Animation abläuft, welche die dem graphischen Objekt zugeordnete Funktion veranschaulicht. Ferner betrifft die Erfindung eine Vorrichtung zum Anzeigen von Informationen mit einem Display zur graphischen Darstellung von Informationen, einer Steuereinrichtung, mit welcher Graphikdaten erzeugbar sind, die zumindest eine Liste mit mehreren graphischen Objekten auf dem Display graphisch darstellen, wobei jedem dargestellten graphischen Objekt ein Anzeigebereich des Displays und eine Funktion zugeordnet sind, und einer Eingabeeinrichtung zum Auswählen eines auf dem Display angezeigten Objekts. Die Information wird bei dem Verfahren und mittels der Vorrichtung insbesondere in einem Fahrzeug angezeigt. Das Display ist in diesem Fall in dem Fahrzeug befestigt.

In einem Kraftfahrzeug gibt es verschiedene Informations- und Kommunikationsbereiche, denen Anzeigeinstrumente zugeordnet sind. Sie dienen der Information des Fahrers und der Mitfahrer. Ferner können sie den Fahrer bei der Navigation oder der Kommunikation mit der Außenwelt unterstützen. Die Anzeige kann insbesondere verkehrs- oder betriebsbezogene Daten des Fahrzeugs visuell darstellen. In der Nähe des primären Sichtfelds des Fahrers ist das sog. Kombünstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und andere Audiofunktionen dargestellt werden. Schließlich können Menüs für Telefon, Navigation, Telematikdienste und Multimediaanwendungen angezeigt werden. Als Display werden üblicherweise Flüssigkristallanzeigen in verschiedenen Ausführungen verwendet.

In der DE 100 01 988 A1 ist beispielsweise ein Kombünstrument zur Anzeige von betriebs- und/oder verkehrsbezogenen Daten beschrieben. Um das vielfältige Informationsangebot besser aufnehmen zu können, wird in der DE 103 03 792 A1 eine perspektivische Darstellung dreidimensionaler Elemente vorgeschlagen.

Als weitere Anzeigeeinrichtung besitzt ein Fahrzeug häufig eine Multifunktionsanzeige in der Mittelkonsole oder oberhalb der Mittelkonsole. Eine solche Anzeige für ein Multifunktionsbedienelement ist beispielsweise in der DE 199 41 955 A1 beschrieben.

Um die vielfältigen Bedien- und Anzeigemöglichkeiten übersichtlich darzustellen, werden häufig hierarchische Menüstrukturen verwendet.

Die Menüpunkte eines Menüs werden vielfach in Form einer Liste anhand von graphischen Objekten dargestellt. Bei der Auswahl eines der dargestellten graphischen Objekte wird die dem entsprechenden Menüpunkt zugeordnete Funktion ausgeführt. Diese Funktion kann auch die Anzeige eines Untermenüs mit weiteren Untermenüpunkten umfassen.

Werden solche Listen mit auswählbaren graphischen Objekten in einem Fahrzeug eingesetzt, ergibt sich das Problem, dass die Aufnahme der von dem Display angezeigten Informationen, wie z.B. die Zuordnung einer gewünschten Funktion zu einem angezeigten graphischen Objekt, die Aufmerksamkeit des Fahrers derart beanspruchen, dass es zu einer Ablenkung des Fahrers beim Führen des Fahrzeugs kommt. Es ist daher wünschenswert, die Informationen im Fahrzeug so darzustellen, dass sie schnell und intuitiv vom Fahrer aufgenommen werden können, so dass das Erfassen der dargestellten Informationen nicht zu einer Ablenkung des Fahrers während der Fahrt führt. Ferner soll die Bedienung so intuitiv, einfach und schnell durchführbar sein, dass der Fahrer die Einrichtungen des Fahrzeugs, deren Informationen von der Anzeigeeinrichtung dargestellt werden, auch während der Fahrt bedienen kann. Die Informationsdarstellung und die mit einer Informationsdarstellung verbundene Bedienung in dem Kraftfahrzeug trägt somit zur Sicherheit beim Führen des Kraftfahrzeugs bei.

In der US 5 736 974 A1 ist ein Verfahren und eine Vorrichtung zum Darstellen eines Menüs gemäβ dem Oberbegriff des Anspruchs 1 und des Anspruchs 6 beschrieben. Um die für die Darstellung des Menüs benötigte Fläche möglichst gering zu halten und einem Nutzer jeden einzelnen der gegebenenfalls zahlreichen Menüpunkte leicht erkennbar zu machen, wird eine Vergrößerung der einem bestimmten Menüpunkt zugeordneten Schaltfläche vorgeschlagen, wenn sich ein Cursor an diese Schaltfläche annähert.

Es ist die Aufgabe der vorliegenden Erfindung, ein Verfahren und eine Vorrichtung der eingangs genannten Art bereitzustellen, bei denen die dargestellte Information so schnell und intuitiv wie möglich erfassbar ist und die eine schnelle, intuitive und einfache Bedienung insbesondere von Fahrzeugeinrichtungen ermöglichen, deren Informationen dargestellt werden.

Erfindungsgemäß wird diese Aufgabe durch ein Verfahren mit den Merkmalen des Anspruchs 1 und eine Vorrichtung mit den Merkmalen des Anspruchs 6 gelöst. Vorteilhafte Aus- und Weiterbildungen ergeben sich aus den Unteransprüchen.

Das erfindungsgemäße Verfahren ist dadurch gekennzeichnet, dass die Animation die dem graphischen Objekt zugeordnete Funktion dadurch veranschaulicht, dass sie zumindest schematisch eine Bildfolge wiedergibt, die einer Bildfolge entspricht, die angezeigt wird, wenn das Objekt ausgewählt wird. Liegt die Funktion beispielsweise darin, dass bei der Darstellung eines flächigen Objekts das Objekt von einer Seite, auf der bestimmte Informationen dargestellt werden, zu der anderen Seite umgedreht wird, auf welcher andere Informationen dargestellt werden, so wird in dem Anzeigebereich des graphischen Objekts der Liste schematisch eine Bildfolge mit einer Drehung eines flächigen Objekts wiedergegeben. Bei der Animation wird insbesondere eine Bildfolge wiedergegeben, die bei einem Betrachter den Eindruck einer kontinuierlichen Bewegung erzeugt. Hierfür enthält die Bildfolge eine Vielzahl von Zwischenbildern.

Es hat sich herausgestellt, dass insbesondere dann, wenn eine Vielzahl von graphischen Objekten gleichzeitig auf dem Display z. B. in einem Fahrzeug dargestellt werden, die statische Anzeige eines Icons, d.h. eines Bild- und/oder Textelements, vom Fahrer während der Fahrt zum Teil nicht schnell genug erfasst werden kann. Die erfindungsgemäße Wiedergabe einer Animation, die dem graphischen Objekt zugeordnet ist, führt dazu, dass die dem Objekt zugeordnete Funktion intuitiver und schneller vom Betrachter erkannt werden kann.

Im Fahrzeug ergibt sich außerdem die Besonderheit, dass die verwendeten Displays üblicherweise aufgrund der Bauraumverhältnisse im Innenraum des Fahrzeugs relativ klein sind. Werden mehrere graphische Objekte einer Liste auf dem Display dargestellt, ist der Anzeigebereich, welcher einem graphischen Objekt zugeordnet ist, vielfach sehr klein, wodurch die Erkennbarkeit des Informationsinhalts der graphischen Darstellung weiter erschwert wird. Der Ablauf einer dem Objekt zugeordneten Animation führt auch in diesem Fall dazu, dass der Betrachter die dem Objekt zugeordnete Funktion schneller und intuitiver erkennen kann.

Es wird darauf hingewiesen, dass die den Objekten zugeordneten Anzeigebereiche nicht statisch sondern veränderbar sind. Die Objekte können durch Eingaben des Nutzers oder automatisch geometrisch auf vielfältige Weise auf dem Display angeordnet werden. Auch kann die Größe des Anzeigebereichs für ein Objekt variieren. Die Größe der Wiedergabe der Animation richtet sich dabei insbesondere nach der Größe des Anzeigebereichs, welcher dem Objekt zugeordnet ist, zu welchem die Animation gehört.

Für welche graphischen Objekte Animationen ablaufen können, kann insbesondere von den Funktionen abhängen, die dem jeweiligen graphischen Objekt zugeordnet sind. Bevorzugt laufen für alle dargestellten graphischen Objekte in deren jeweiligen Anzeigebereichen Animationen ab, welche die dem jeweiligen graphischen Objekt zugeordnete Funktion veranschaulichen.

Gemäß einer bevorzugten Weiterbildung des erfindungsgemäßen Verfahrens bricht nach der Auswahl eines graphischen Objekts die Animation ab und die dem Objekt zugeordnete Funktion wird ausgeführt. Die Funktion, welche dem Objekt zugeordnet ist, kann auch zu einer Veränderung des Anzeigebildes führen, so dass beim Ausführen der Funktion das graphische Objekt nicht mehr, bei einer anderen Position oder in einer anderen Größe angezeigt wird.

Die Wiedergabe der Animation für ein graphisches Objekt dauert ein bestimmtes Zeitintervall. Nachdem die Animation vollständig abgelaufen ist, wird sie bevorzugt fortwährend wiederholt. Diese Wiederholung der Animation wird insbesondere für alle graphischen Objekte durchgeführt, für welche eine Animation bei der Anzeige der Liste wiedergegeben wird.

Bei der erfindungsgemäßen Vorrichtung zum Anzeigen von Informationen, insbesondere in einem Fahrzeug, ist vor der Auswahl eines der Objekte von der Steuereinrichtung im Anzeigebereich zumindest eines graphischen Objekts eine Animation erzeugbar, welche die dem graphischen Objekt zugeordnete Funktion veranschaulicht. Sie ist dadurch gekennzeichnet, dass die Animation die dem graphischen Objekt zugeordnete Funktion dadurch veranschaulichbar ist, dass sie zumindest schematisch eine Bildfolge wiedergebbar ist, die einer Bildfolge entspricht, die angezeigt wird, wenn das Objekt ausgewählt wird. Diese Animation wird auf dem Display bei der Darstellung der Liste wiedergegeben.

Die Eingabeeinrichtung kann beispielsweise eine berührungsempfindliche Oberfläche des Displays (Touchscreen) umfassen. Ferner kann die Eingabeeinrichtung ein von dem Display abgesetztes Bedienelement umfassen.

Des Weiteren kann die Eingabeeinrichtung eine Einrichtung zum Erfassen und Auswerten einer Geste eines Körperteils eines Nutzers umfassen, welche vor dem Display ausgeführt wird. Hierfür kann die Eingabeeinrichtung insbesondere eine Empfangseinrichtung umfassen, an die ein Signal von dem Körperteil des Nutzers kapazitiv übertragbar ist, wenn sich der Körperteil in der Nähe der Empfangseinrichtung befindet. Mittels dieser kapazitiven Koppelung kann die Position des Körperteils detektiert werden. Aus der zeitlichen Veränderung dieser Position kann auf eine Geste des Nutzers geschlossen werden. Ferner kann gemäß einer anderen Ausgestaltung die Eingabeeinrichtung eine Infrarotlichtquelle oder einen Empfänger für reflektiertes Infrarotlicht zum Erfassen der Geste des Körperteils des Nutzers umfassen. Auch in diesem Fall wird die Position des Körperteils und deren zeitliche Veränderung erfasst und als Geste interpretiert.

Die Animation oder die Animationen können von der Steuereinrichtung selbst erzeugt werden. Dabei kann die Art und Weise, wie die Animation erzeugt wird, von Fahrzeugparametern, wie der Fahrzeuggeschwindigkeit, abhängen. Ferner kann die Steuereinrichtung mit einem Speicher gekoppelt sein, in dem Daten für die Animation bzw. die Animationen gespeichert sind. Zum Erzeugen der Animation werden die Animationsdaten in diesem Fall von dem Speicher an die Steuereinrichtung übertragen, welche sie beim Erzeugen der Graphikdaten, die auf dem Display angezeigt werden, verwertet.

Die Erfindung wird nun anhand eines Ausführungsbeispiels mit Bezug zu den Zeichnungen erläutert.

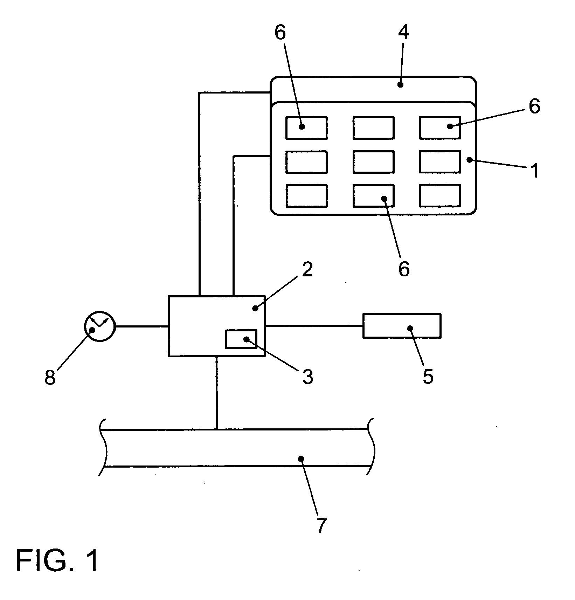

- Figur 1: zeigt schematisch ein Ausführungsbeispiel der erfindungsgemäßen Vorrichtung und die Verbindung dieser Vorrichtung mit anderen Einrichtungen des Fahrzeugs und
- die Fig. 2A bis 2D: veranschaulichen eine Animation für ein graphisches Objekt der Liste, die auf dem Display dargestellt wird.

Das im folgenden beschriebene Ausführungsbeispiel bezieht sich auf Informationsanzeigen in einem Fahrzeug, insbesondere einem Kraftfahrzeug. Die Erfindung kann auf gleiche Weise jedoch auch bei Informationsanzeigen außerhalb eines Fahrzeugs eingesetzt werden, z. B. bei der Informationsanzeige auf einem mobilen Gerät.

Die Anzeigevorrichtung umfasst ein Display 1 zur grafischen Darstellung von Informationen. Bei dem Display 1 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Dem Display 1 ist eine (nicht gezeigte) Hintergrundbeleuchtung zugeordnet, die durch eine oder mehrere lichtemittierende Dioden bereitgestellt werden kann. Das Display 1 ist frei programmierbar, d. h. es lassen sich beliebige Grafikdaten erzeugen, welche auf dem Display 1 dargestellt werden.

Das Display 1 ist insbesondere in einem Bereich des Fahrzeugs befestigt, der zumindest für den Fahrer gut sichtbar ist. Ist die Bedienung der Einrichtungen des Fahrzeugs direkt mit der Anordnung des Displays gekoppelt, so dass der Benutzer z. B. seine Hand oder seinen Finger zumindest in die Nähe des Displays 1 bringen muss, um Eingaben vorzunehmen, ist das Display 1 so angeordnet, dass es der Fahrer des Fahrzeugs leicht mit seiner Hand oder seinem Finger erreichen kann. Beispielsweise kann das Display 1 in der Mittelkonsole des Fahrzeugs untergebracht sein.

Das Display 1 ist mit einer Steuereinrichtung 2 verbunden, mit welcher Grafikdaten für auf dem Display 1 darstellbare grafische Objekte erzeugbar sind. Ferner ist die Steuereinrichtung 2 mit einer Eingabeeinrichtung 4 verbunden, über welche der Benutzer Einrichtungen des Fahrzeugs, deren Informationen auf dem Display 1 angezeigt werden, steuern kann.

Bei der Eingabeeinrichtung 4 kann es sich beispielsweise um eine Einrichtung zum Erfassen und Auswerten einer Geste eines Körperteils eines Nutzers handeln. Beispielsweise kann die Hand des Benutzers vor dem Display 1 die Geste ausführen. Dabei wird die dreidimensionale Position der Hand in einem bestimmten Aufenthaltsbereich vor dem Display 1 erfasst, ohne dass es erforderlich ist, dass das Display 1 berührt wird. Der zugelassene Aufenthaltsbereich hängt von der Anordnung des Displays 1 in dem Kraftfahrzeug ab. Der Bereich sollte so gewählt sein, dass der Aufenthalt der Hand eines Benutzers, in diesem Aufenthaltsbereich eindeutig mit einer Bedienung der Eingabeeinrichtung 4 in Verbindung gebracht werden kann. Die Grenze des Aufenthaltsbereichs kann z. B. 40 cm bis 10 cm vor dem Display 1 liegen. Wird die Hand des Benutzers näher als dieser Schwellwert an das Display 1 heranbewegt, wird dies von der Eingabeeinrichtung 4 erkannt und die Annäherung wird als Bedienabsicht interpretiert. Dies kann z. B. dazu führen, dass die von dem Display 1 angezeigten Objekte anders dargestellt werden. Die Eingabeeinrichtung 4 detektiert die Position und die Bewegung der Hand des Benutzers in dem Aufenthaltsbereich. Dabei werden verschiedene, von der Hand ausgeführte Gesten erkannt und als Eingaben interpretiert.

Die Eingabeeinrichtung 4 kann z. B. Infrarotlichtquellen und Infrarotlichtempfänger umfassen, welche das an der Hand reflektiert Infrarotlicht detektieren. Details einer solchen Eingabeeinrichtung sind in der DE 100 58 244 C2 beschrieben, deren diesbezüglicher Offenbarungsgehalt hiermit in die vorliegende Beschreibung aufgenommen wird. Weitere Eingabeeinrichtungen, die in Verbindung mit der Anzeigeeinrichtung eingesetzt werden können, sind in folgenden Veröffentlichungen beschrieben: DE 103 05 341 A1 und DE 10 2004 048 956 A1.

Des Weiteren kann die Position der Hand und deren zeitliche Veränderung auch mittels eines optischen Systems erfasst werden. Bei diesem System emittiert eine lichtemittierende Diode z. B. rechteckförmiges amplitudenmoduliertes Licht. Dieses Licht wird an dem zu detektierenden Objekt, d. h. der Hand, reflektiert und gelangt nach der Reflexion zu einer Fotodiode. Eine weitere lichtemittierende Diode emittiert ebenfalls rechteckförmiges amplitudenmoduliertes Licht zur Fotodiode, welches jedoch um 180° phasenversetzt ist. Bei der Fotodiode überlagern sich die beiden Lichtsignale und heben sich auf, falls sie genau die gleiche Amplitude aufweisen. Falls sich die Signale bei der Fotodiode nicht aufheben, wird die Lichtemission der zweiten Diode über einen Regelkreis so geregelt, dass sich das Gesamtempfangssignal wieder zu Null ergänzt. Ändert sich die Position des Objekts, ändert sich auch der Lichtanteil, welcher von der ersten lichtemittierenden Diode zur Fotodiode über die Reflexion an dem Objekt gelangt. Dies bewirkt ein Nachführen der Intensität der zweiten lichtemittierenden Diode durch den Regelkreis. Das Regelsignal ist somit ein Maß für die Reflexion des Lichts, welches von der ersten Diode emittiert wird, an dem Objekt. Auf diese Weise lässt sich aus dem Regelsignal ein Signal ableiten, welches für die Position des Objekts charakteristisch ist.

Des Weiteren kann die Eingabeeinrichtung eine berührungsempfindliche Folie sein, die auf dem Display 1 vorgesehen ist. Mit der Folie kann die Position einer Berührung des hinter der Folie angeordneten Displays 1 detektiert werden. Die Folie kann z. B. als resistive Touchfolie, kapazitive Touchfolie oder piezoelektrische Folie ausgebildet sein. Ferner kann die Folie so ausgebildet sein, dass ein Wärmestrom, der z. B. von dem Finger eines Benutzers ausgeht, gemessen wird. Aus der zeitlichen Entwicklung der Berührung der Folie lassen sich verschiedene Eingaben gewinnen. Beispielsweise kann im einfachsten Fall das Berühren der Folie bei einer bestimmten Position einem auf dem Display 1 angezeigten grafischen Objekt zugeordnet werden. Des Weiteren können Gleitbewegungen des Fingers über die Folie interpretiert werden. Insbesondere kann der Benutzer auf diese Weise eine Linie auf dem Display 1 definieren, indem er an einem Punkt die Folie berührt, zu einem anderen Punkt hin auf der Folie gleitet und den Finger bei dem anderen Punkt von der Folie wegnimmt.

Schließlich kann als Eingabeeinrichtungen ein abgesetztes Bedienelement eingesetzt werden. Bei dem abgesetzten Bedienelement handelt es sich insbesondere um ein mechanisches Bedienelement. Beispielsweise kann ein Drehschalter vorgesehen sein, durch den auf dem Display angezeigte Objekte ansteuerbar und durch Drücken des Drehschalters auswählbar sind. Ferner kann durch den Drehschalter auch direkt ein Drehwinkel eingegeben werden, wie es später erläutert wird. Zusätzlich können um den Drehschalter herum separate Druckschalter angeordnet sein, wobei die Anordnung von Anzeigefeldern auf dem Display, die den Druckschaltern zugeordnet sind, zumindest schematisch der Anordnung der Druckschalter entspricht. Das erfindungsgemäße Informationssystem kann beispielsweise eine Multifunktionsbedienvorrichtung umfassen, wie sie in der EP 1 212 208 B1 beschrieben ist.

Die Steuereinrichtung 2 ist ferner mit einer Systemuhr 8 und mit einem Fahrzeugbus 7 gekoppelt. Über den Fahrzeugbus 7 ist die Steuereinrichtung 2 mit Fahrerassistenzsystemen des Fahrzeugs verbunden. Die Steuereinrichtung 2 erhält über den Fahrzeugbus 7 Daten dieser Fahrerassistenzsysteme und bereitet die so auf, dass diese Daten dem Fahrer bzw. den Fahrzeuginsassen über das Display 1 grafisch dargestellt werden. Die Steuereinrichtung 2 erzeugt hierfür Grafikdaten für auf dem Display 1 darstellbare Objekte, welche unter anderem die Informationen der Fahrerassistenzsysteme grafisch darstellen. Ferner ist die Steuereinrichtung 2 über den Fahrzeugbus 7 mit verschiedenen Informations- und Kommunikations- sowie Unterhaltungseinrichtungen des Fahrzeugs verbunden. Die vielfältigen Informationen dieser Einrichtungen des Fahrzeugs werden in der Steuereinrichtung 2 aufbereitet und in Grafikdaten für eine grafische Darstellung umgewandelt. Für Animationen der grafischen Darstellung auf dem Display umfasst die Steuereinrichtung eine Recheneinheit 3, welche beim Erzeugen von Zwischenbildern auf die Systemuhr 8 zurückgreift.

Im Folgenden wird die Informationsanzeige in dem Fahrzeug auf dem Display 1 im Detail erläutert:
Von dem Display 1 wird eine Liste mit mehreren graphischen Objekten 6 dargestellt. Die Liste kann beispielsweise zu einem Menü gehören. Dabei können auf dem Display 1 entweder alle Objekte 6 der Liste graphisch dargestellt werden oder nur ein Teil der Objekte 6 der Liste. Jedem dargestellten graphischen Objekt 6 wird ein Anzeigebereich im Display zugeordnet. Die Größe des Anzeigebereichs hängt dabei insbesondere von der Größe des Displays 1 und der Anzahl der darzustellenden graphischen Objekte 6 ab. Die graphischen Objekte 6 sind, wie vorstehend beschrieben, mittels der Eingabeeinrichtung 4 zum Erzeugen einer Funktion auswählbar, die dem graphischen Objekt 6 zugeordnet ist.

Vor der Auswahl eines der Objekte 6 läuft im Anzeigebereich zumindest eines graphischen Objekts 6 eine Animation ab, welche die dem graphischen Objekt zugeordnete Funktion veranschaulicht. Die Animation läuft innerhalb des Fensters ab, welches von dem Anzeigebereich des zugeordneten graphischen Objekts 6 gebildet wird.

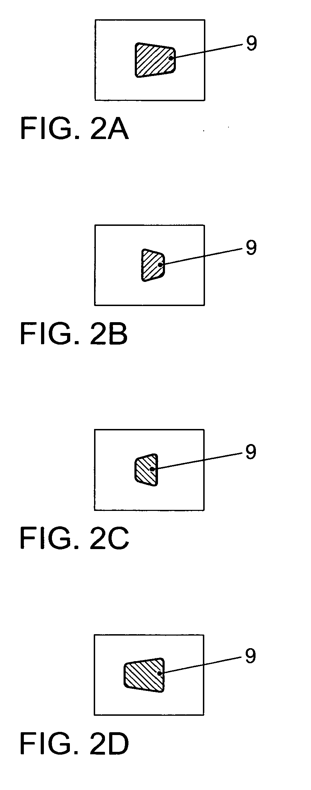

Im Folgenden wird mit Bezug zu den Fig. 2A bis 2D eine Animation erläutert, die im Anzeigebereich eines graphischen Objekts 6 abläuft, dem eine Funktion zugeordnet ist, die zu einer Drehung eines flächigen graphischen Objekts führt. Diese Funktion wird bei der Animation dadurch veranschaulicht, dass ein flächiges Objekt perspektivisch um 180° gedreht wird. Bei der Animation wird eine Bildfolge mit einer Vielzahl von Zwischenbildern wiedergegeben, die bei einem Betrachter den Eindruck einer kontinuierlichen Drehung erzeugt. In den Fig. 2A bis 2D ist ein Teil der Zwischenbilder der Animation gezeigt. Dabei wird das Objekt 9, welches innerhalb eines Teilbereichs des Anzeigebereichs des graphischen Objekts 6 wiedergegeben wird, um eine vertikale Achse gedreht. Zu Beginn der Drehung fällt die vertikale Achse mit der rechten vertikalen Seitenkante des Objekts 9 zusammen. Im Verlauf der Drehung wird die vertikale Achse in horizontaler Richtung vom rechten Rand des Teilbereichs des Anzeigebereichs des Objekts 6 zum linken Rand des Teilbereichs des Anzeigebereichs des Objekts 6 verschoben. Gleichzeitig wird das Objekt 9 um die vertikale Achse gedreht, wie es in den Figuren 2A bis 2D gezeigt ist. Nach einer Drehung um 180° befindet sich die vertikale Achse am linken Rand des Teilbereichs des Anzeigebereichs des Objekts 6. Dabei ist die horizontale Verschiebung der vertikalen Achse linear mit der Drehung des grafischen Objekts 9 synchronisiert.

### BEZUGSZEICHENLISTE

- 1: Display
- 2: Steuereinrichtung
- 3: Recheneinheit
- 4: Eingabeeinrichtung
- 5: Speicher
- 6: grafisches Objekt
- 7: Fahrzeugbus
- 8: Systemuhr
- 9: Objekt

## Patentansprüche

1. Verfahren zum Anzeigen von Informationen, insbesondere in einem Fahrzeug, bei dem eine Liste mit mehreren graphischen Objekten (6) mittels eines Displays (1) graphisch dargestellt wird, wobei jedem dargestellten graphischen Objekt (6) ein Anzeigebereich des Displays (1) zugeordnet ist und wobei die Objekte zum Erzeugen einer Funktion auswählbar sind, wobei vor der Auswahl eines der Objekte (6) im Anzeigebereich zumindest eines graphischen Objekts (6) eine Animation abläuft, welche die dem graphischen Objekt (6) zugeordnete Funktion veranschaulicht,
**dadurch gekennzeichnet,**
**dass** die Animation die dem graphischen Objekt (6) zugeordnete Funktion dadurch veranschaulicht, dass sie zumindest schematisch eine Bildfolge wiedergibt, die einer Bildfolge entspricht, die angezeigt wird, wenn das Objekt ausgewählt wird.

2. Verfahren nach Anspruch 1,
**dadurch gekennzeichnet,**
**dass** für alle dargestellten graphischen Objekte (6) in deren jeweiligen Anzeigebereichen Animationen ablaufen, welche die dem jeweiligen graphischen Objekt (6) zugeordnete Funktion veranschaulichen.

3. Verfahren nach Anspruch 1 oder 2
**dadurch gekennzeichnet,**
**dass** nach der Auswahl eines graphischen Objekts (6) die Animation abbricht und die dem Objekt (6) zugeordnete Funktion ausgeführt wird.

4. Verfahren nach einem der vorhergehenden Ansprüche,
**dadurch gekennzeichnet,**
**dass** bei der Animation eine Bildfolge wiedergegeben wird, die bei einem Betrachter den Eindruck einer kontinuierlichen Bewegung erzeugt.

5. Verfahren nach einem der vorhergehenden Ansprüche,
**dadurch gekennzeichnet,**
**dass** die Animation oder die Animationen hintereinander wiederholt wiedergegeben werden.

6. Vorrichtung zum Anzeigen von Informationen, insbesondere in einem Fahrzeug, mit
- einem Display (1) zur graphischen Darstellung von Informationen,
- einer Steuereinrichtung (2), mit welcher Graphikdaten erzeugbar sind, die zumindest eine Liste mit mehreren graphischen Objekten auf dem Display (1) graphisch darstellen, wobei dem dargestellten graphischen Objekt (6) ein Anzeigebereich des Displays (1) und eine Funktion zugeordnet sind und wobei vor der Auswahl eines der Objekte (6) im Anzeigebereich zumindest eines graphischen Objekts (6) eine Animation erzeugbar ist, welche die dem graphischen Objekt (6) zugeordnete Funktion veranschaulicht, und
- eine Eingabeeinrichtung (4) zum Auswählen eines auf dem Display angezeigten Objekts (6),
**dadurch gekennzeichnet, dass**
- mittels der Steuereinrichtung (2) die Animation die dem graphischen Objekt (6) zugeordnete Funktion dadurch veranschaulichbar ist, dass zumindest schematisch eine Bildfolge wiedergebbar ist, die einer Bildfolge entspricht, die angezeigt wird, wenn das Objekt ausgewählt wird.

7. Vorrichtung nach Anspruch 6,
**dadurch gekennzeichnet,**
**dass** die Eingabeeinrichtung(4) eine berührungsempfindliche Oberfläche des Displays umfasst.

8. Vorrichtung nach Anspruch 6 oder 7,
**dadurch gekennzeichnet,**
**dass** die Eingabeeinrichtung (4) ein vom Display abgesetztes Bedienelement umfasst.

9. Vorrichtung nach einem der Ansprüche 6 bis 8,
**dadurch gekennzeichnet,**
**dass** die Vorrichtung einen mit der Steuereinrichtung (2) gekoppelten Speicher (5) umfasst, in dem Daten für die Animation gespeichert sind

## Claims

1. Method for displaying information, particularly in a vehicle, in which a list having a plurality of graphical objects (6) is graphically presented by means of a display (1), wherein each presented graphical object (6) has an associated display area of the display (1) and wherein the objects can be selected to produce a function, wherein, prior to the selection of one of the objects (6), the display area of at least one graphical object (6) is used to execute an animation which illustrates the function associated with the graphical object (6),
**characterized**
**in that** the animation illustrates the function associated with the graphical object (6) by at least schematically reproducing an image sequence which corresponds to an image sequence which is displayed when the object is selected.

2. Method according to Claim 1,
**characterized**
**in that** for all presented graphical objects (6) the respective display areas thereof are used to execute animations which illustrate the function associated with the respective graphical object (6).

3. Method according to Claim 1 or 2,
**characterized**
**in that**, following the selection of a graphical object (6), the animation terminates and the function associated with the object (6) is performed.

4. Method according to one of the preceding claims,
**characterized**
**in that** the animation involves the reproduction of an image sequence which provides an observer with the impression of a continuous movement.

5. Method according to one of the preceding claims,
**characterized**
**in that** the animation or the animations are reproduced repeatedly in succession.

6. Apparatus for displaying information, particularly in a vehicle, having
- a display (1) for graphically presenting information,
- a control device (2) which can be used to produce graphics data which graphically present at least one list having a plurality of graphical objects on the display (1), wherein the presented graphical object (6) has an associated display area of the display (1) and an associated function and wherein, prior to the selection of one of the objects (6), the display area of at least one graphical object (6) can be used to produce an animation which illustrates the function associated with the graphical object (6), and
- an input device (4) for selecting an object (6) displayed on the display,
**characterized in that**
- the control device (2) can be used by the animation to illustrate the function associated with the graphical object (6) by virtue of it being possible to at least schematically reproduce an image sequence which corresponds to an image sequence which is displayed when the object is selected.

7. Apparatus according to Claim 6,
**characterized**
**in that** the input device (4) comprises a touch-sensitive surface of the display.

8. Apparatus according to Claim 6 or 7,
**characterized**
**in that** the input device (4) comprises an operator control element which is remote from the display.

9. Apparatus according to one of Claims 6 to 8,
**characterized**
**in that** the apparatus comprises a memory (5) which is coupled to the control device (2) and which stores data for the animation.

## Revendications

1. Procédé d'affichage d'informations, notamment dans un véhicule automobile, dans lequel une liste comportant une pluralité d'objets graphiques (6) est représentée graphiquement au moyen d'un afficheur (1), une zone d'affichage de l'afficheur (1) étant associée à chaque objet graphique (6) représenté et les objets pouvant être sélectionnés pour générer une fonction, une animation qui illustre la fonction associée à l'objet graphique (6) étant présentée avant la sélection de l'un des objets (6) dans la zone d'affichage d'au moins un objet graphique (6), **caractérisé en ce que** l'animation illustre la fonction affectée à l'objet graphique (6) de manière à représenter au moins schématiquement une séquence d'images qui correspond à une séquence d'images affichée lorsque l'objet est sélectionné.

2. Procédé selon la revendication 1, **caractérisé en ce que** des animations qui illustrent la fonction associée à l'objet graphique (6) respectif sont présentées pour tous les objets graphiques (6) représentés dans leurs zones d'affichage respectives.

3. Procédé selon la revendication 1 ou 2, **caractérisé en ce qu'**après la sélection d'un objet graphique (6), l'animation s'interrompt et la fonction associée à l'objet (6) est exécutée.

4. Procédé selon l'une quelconque des revendications précédentes, **caractérisé en ce qu'**une séquence d'images qui suscite l'impression d'un mouvement continu chez un observateur est reproduite lors de l'animation.

5. Procédé selon l'une quelconque des revendications précédentes, **caractérisé en ce que** l'animation ou les animations sont reproduites l'une après l'autre de manière répétée.

6. Procédé d'affichage d'informations, notamment dans un véhicule automobile, comprenant :
- un afficheur (1) destiné à la représentation graphique d'information,
- un dispositif de commande (2) permettant de générer des données graphiques qui représentent graphiquement sur l'afficheur (1) au moins une liste comportant une pluralité d'objets graphiques, une zone d'affichage de l'afficheur (1) et une fonction étant associées à l'objet graphique (6) représenté et une animation qui illustre la fonction associée à l'objet graphique (6) pouvant être générée avant la sélection de l'un des objets (6) dans la zone d'affichage d'au moins un objet graphique (6), et
- un dispositif d'entrée (4) destiné à sélectionner un objet (6) affiché sur l'afficheur,
**caractérisé en ce que**
- l'animation est apte à illustrer la fonction associée à l'objet graphique (6) au moyen du dispositif de commande (2) de telle manière qu'une séquence d'images qui correspond à une séquence d'images affichée lorsque l'objet est sélectionné puisse être reproduite au moins schématiquement.

7. Dispositif selon la revendication 6, **caractérisé en ce que** le dispositif d'entrée (4) comprend une surface tactile de l'afficheur.

8. Dispositif selon la revendication 6 ou 7, **caractérisé en ce que** le dispositif d'entrée (4) comprend un élément de commande séparé de l'afficheur.

9. Dispositif selon l'une quelconque des revendications 6 à 8, **caractérisé en ce que** le dispositif comprend une mémoire (5) reliée au dispositif de commande (2), dans laquelle sont stockées des données destinées à l'animation.
